# EUROPEAN PATENT APPLICATION

(11) **EP 0 621 435 A1**
(43) Date of publication of application: **26.10.1994**
(21) Application number: 93830162.9
(22) Date of filing: 14.04.1993
(51) Int. Cl.: F16L 59/02

(54) **Covering element for pipe thermally insulating materials, in particular for industrial systems**

(71) Applicant: DONATI COIBENTAZIONI S.r.l., I-24060 San Paolo d'Argon (Bergamo) (IT)
(72) Inventor: Donati, Giuseppe, DONATI COIBENTAZIONI S.r.l., I-24060 San Paolo d'Argon (Bergamo) (IT); Donati, Francesco, DONATI COIBENTAZIONI S.r.l., I-24060 San Paolo d'Argon (Bergamo) (IT); Oberti, Pierrosario, DONATI COIBENTAZIONI S.r.l., I-24060 San Paolo d'Argon (Bergamo) (IT)
(74) Representative: Cicogna, Franco

(57) **Abstract**

The covering element (1) comprises a foldable material sheet (2) which, near two opposite sides (3a,3b) thereof, which can be mutually superimposed by folding the sheet about the thermally insulating material of the pipe, is provided with engaging means (7) which can be mutually connected, in order to hold the two sides of the sheet in their mutually superimposed relationship.

## Description

### BACKGROUND OF THE INVENTION

The present invention relates to a covering element for pipe thermally insulating materials, in particular for industrial systems.

As is known, the pipes or ducts of industrial systems are coated, in order to prevent heat from being dissipated therefrom, by one or more layers of a thermally insulating material, such as, for example, rock wool, polyurethane, polystirene and so on.

This thermally insulating material is conventionally pre-shaped into two half-shells, which are arranged about the pipe to be thermally insulated and are then affixed to said pipe.

A further outer coating for the thermally insulating material is moreover conventionally provided, which has the double function of protecting the thermally insulating material from the outside environment, in order to prevent this material from being eroded, and holding the two half-shells of thermally insulating material in a locked condition about the pipe.

This coating generally comprises a covering element, made of a sheet metal material, which is wound, by properly folding it, about the thermally insulating material, so as to cause the two opposite sides of the sheet to be superimposed onto one another, in order to mutually affix them by means of self-threading screws, or other equivalent locking systems.

The operation of locating and locking the two opposite sides of the sheet metal element so as to mutually superimpose said sides, is very difficult, particularly if the sheet elements have a comparatively great length.

In such a case, actually, in order to hold the two sides of the sheet metal element in their proper positions, before and during the application of the screws, it is necessary to use a great number of workers.

On the other hand, a scarcely accurate superimposition of the two sides of the sheet metal material would provide an unsatisfactory coating operation, with a consequent deformation of the sheet material susceptible to press the underlaying thermally insulating material, with a consequent great difficulty in applying the affixing screws.

### SUMMARY OF THE INVENTION

Accordingly, the aim of the present invention is to solve the above mentioned problem, by providing a covering element for pipe thermally insulating materials, which can be applied in a very accurate manner and in a very short time, by a number of operators very reduced with respect to that required for applying conventional covering elements.

Within the scope of the above mentioned aim, a main object of the present invention is to provide such a covering element which can be made at a very low cost comparable to that of conventional covering elements.

Another object of the present invention is to provide such a covering element which can be made starting from easily available materials and apparatus.

According to one aspect of the present invention, the above mentioned aim and objects, as well as yet other objects, which will become more apparent hereinafter, are achieved by a covering element for covering or coating thermally insulating materials for pipes and the like, in particular to be used in industrial systems, characterized in that said covering element comprises a foldable material sheet provided, near two opposite sides thereof which can be mutually superimposed by folding said sheet about a said pipe thermally insulating material, with engagement means which can be mutually coupled in order to hold said two sides in a mutual superimposed relationship.

### BRIEF DESCRIPTION OF THE DRAWINGS

Further characteristics and advantages of the covering element according to the present invention will become more apparent from the followinf detailed disclosure of a preferred, though not exclusive, embodiment thereof which is illustrated, by way of an indicative but not limitative example, in the figures of the accompanying drawings where:

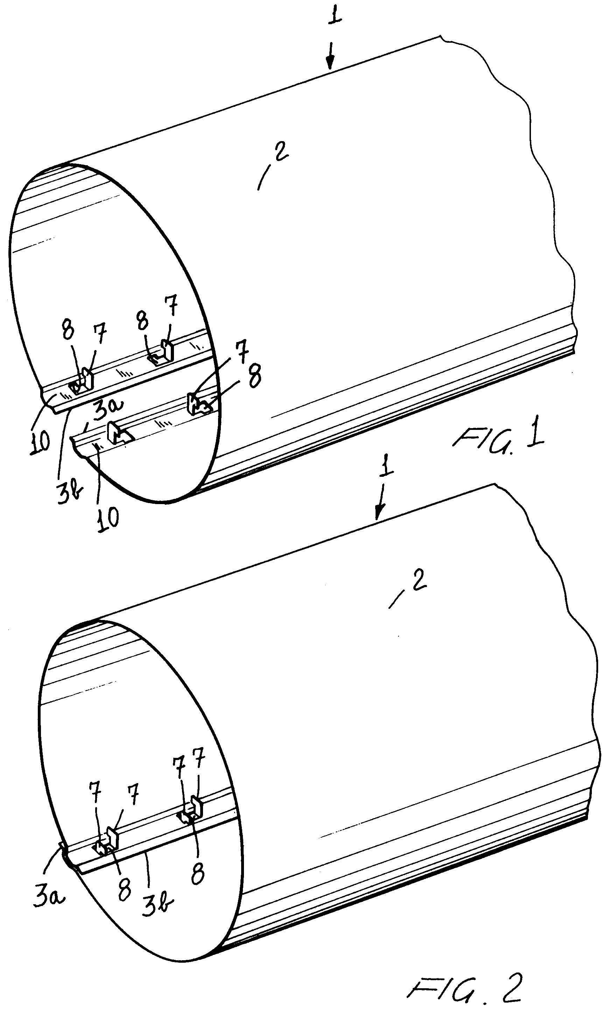

Figure 1 illustrates a length of the covering element according to the present invention, as seen in perspective;
Figure 2 illustrates a length of the covering element, seen in perspective, with two sides thereof mutually superimposed and locked by engagement or locking means;

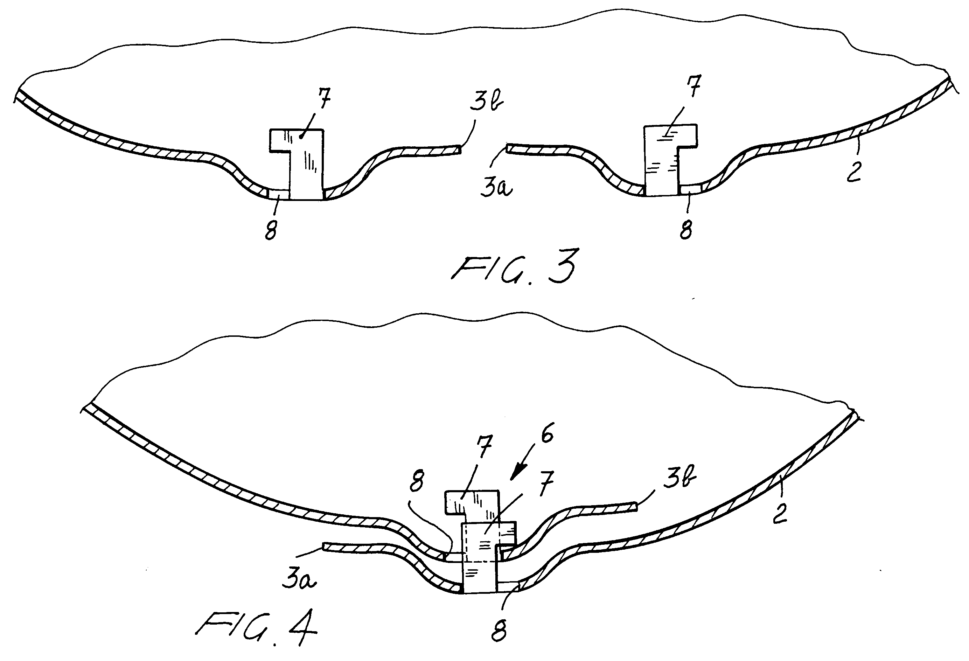

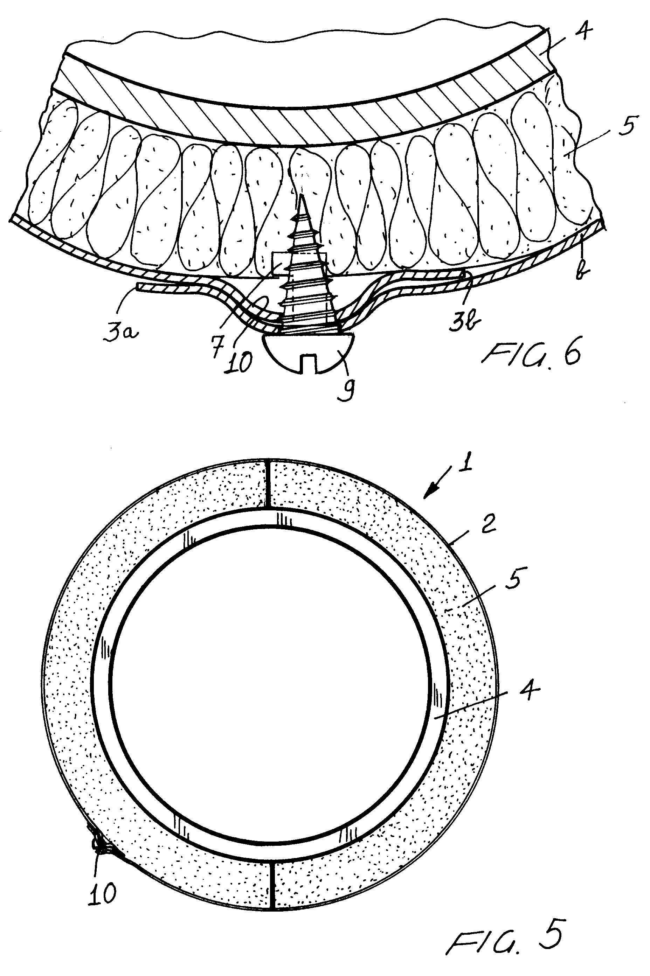

Figures 3 and 4 illustrate, by respective enlarged cross-sectional views, the engagement or locking means, respectively before and after the assembling of the two opposite sides of the covering element;
Figure 5 illustrates the covering element arranged about a thermally insulated pipe, which has been cross-sectioned; and
Figure 6 illustrates an enlarged detail of Figure 5, related to the region provided with the engagement means.

### DESCRIPTION OF THE PREFERRED EMBODIMENT

With reference to the number references of the figures of the accompanying drawings, the covering element according to the present invention, which has been generally indicated at the reference number 1, comprises a sheet 2 made of a foldable material, which, near the two opposite sides 3a and 3b thereof, which can be mutually superimposed by folding the sheet 2 about a pipe 4 coated by a layer 5 of a thermally insulating material, is provided with engagement means 6 which can be mutually coupled in order to hold the two sides 3a and 3b in their mutual superimposition relationship.

More specifically, the engagement or locking means are preferably constituted by hook elements 7, which project from one of the sides 3a or 3b on the face of the sheet 2 provided for facing the pipe 4.

The hook element 7, in particular, can be engaged in seats 8 defined near the other sides 3b or 3a of the sheet 2.

Preferably, there is provided a row of hook elements 7 along the side 3a and a row of said hook elements along the side 3b, and the hook elements 7 of a row are slightly offset in a direction parallel to the related side of the sheet, so that the hook elements of the two rows do not interfere against one another, as the sides 3a and 3b are superimposed.

Moreover, each hook element 7 comprises, advantageously, a cut and bent portion, which is bent toward the inner face or surface of the sheet 2 so that, by a single operation, it is possible to form both the hook elements 7 and the seats 8 provided for receiving the hook elements of the other side of the sheet.

The size of the cut-out portion is so designed that the seats 8 will constitute, with a portion thereof, the holes which will be mutually aligned as the two sides 3a and 3b of the sheet 2 are mutualy superimposed.

In these holes will be engaged the self threading screws 9 which will mutually lock the two sides 3a and 3b.

As shown, the hook elements 7 are arranged at a groove 10 defined by a contoured portion of the sheet 2, near the sides 3a and 3b.

The sheet 2, in particular, can be made of a stainless steel material, or it can be made of a sheet metal material subjected to an anti-oxidizing processing on a surface thereof.

The covering element according to the present invention is assembled by folding the sheet 2, possible pre-bent or pre-curved, about the insulating material layer 5 covering the pipe 4 so as to cause the two sides 3a and 3b to be superimposed on to one another.

The provision of the hook elements 7 and seats 8 on the two sides 3a and 3b of the sheet will allow the operator to easily superimpose the sides 3a and 3b.

From the above disclosure it should be apparent that the invention fully achieves the intended aim and objects.

In particular, the fact is to be pointed out that the covering element according to the invention allows a single operator to cover, with a very great precision and in a very short time, the thermally insulating material of pipes even of a comparatively high length, by successively engaging the hook elements in their respective seats and then affixing the covering element by screws.

In practicing the invention, the used materials, provided they are compatible to the intended applications, as well as their size and shapes, can be any, according to requirements.

## Claims

1. A covering element for covering or coating thermally insulating materials for pipes and the like, in particular to be used in industrial systems, characterized in that said covering element comprises a foldable material sheet provided, near two opposite sides thereof which can be mutually superimposed by folding said sheet about a said pipe thermally insulating material, with engagement means which can be mutually coupled in order to hold said two sides in a mutual superimposed relationship.

2. A covering element, according to Claim 1, characterized in that said engagement or locking means comprise hook elements projecting, near a side of said sheet, on the face of the sheet provided for facing the pipe and being adapted to be engaged in seats defined near the opposite side of said sheet.

3. A covering element, according to one or more of the preceding claims, characterized in that, near said hook elements, there are provided a plurality of holes which can be aligned, by mutually superimposing the two sides of the sheet, with a corresponding plurality of holes defined on the opposite side of the sheet, the aligned holes being adapted to receive therein a respective plurality of a fixing screws.

4. A covering element according to one or more of the preceding claims, characterized in that said hook elements comprise a cut-out portion which is bent toward the face of the sheet provided for facing the pipe.

5. A covering element, according to one or more of the preceding claims, characterized in that said covering element comprises a row of hook elements, near each of the two opposite sides of the sheet element, the hook elements of a row being slightly offset, in a direction parallel to said sides of said sheet, with respect to the hook elelents of the other row.

6. A covering element, according to one or more of the preceding claims, characterized in that said holes for engaging therein said fixing screws, comprise a portion of said seats.

7. A covering element, according to one or more of the preceding claims, characterized in that said seats are made by cutting-out and bending said hook elements.

8. A covering element according to one or more of the preceding claims, characterized in that said hook elements are arranged, at a groove defined by a contoured portion of said sheet, near the two mutually superimposable sides.

9. A covering element according to one or more of the preceding claims, characterized in that said foldable material sheet comprises a stainless steel material sheet element or a sheet element having at least a surface thereof processed by an anti-oxiding treatment.
